# EUROPÄISCHE PATENTSCHRIFT

(11) **EP 3 608 103 B1**
(45) Veröffentlichungstag und Bekanntmachung des Hinweises auf die Patenterteilung: **05.05.2021**
(21) Anmeldenummer: 19188163.0
(22) Anmeldetag: 24.07.2019
(51) Int. Cl.: B32B 41/00, B32B 39/00, B32B 37/06, B32B 37/08, B30B 15/06

(54) **VERFAHREN UND LAMINIERVORRICHTUNG ZUM LAMINIEREN EINES AUS MEHREREN SUBSTRATSCHICHTEN BESTEHENDEN STAPELS ZU EINEM VERBUNDKÖRPER**
METHOD AND LAMINATING APPARATUS FOR LAMINATING A STACK CONSISTING OF SEVERAL SUBSTRATE LAYERS TO FORM A COMPOSITE BODY
PROCÉDÉ ET DISPOSITIF PERMETTANT DE STRATIFIER UN EMPILEMENT CONSTITUÉ DE PLUSIEURS COUCHES DE SUBSTRAT POUR FORMER UN CORPS COMPOSITE

(30) Priorität: 07.08.2018 DE 102018119179
(43) Veröffentlichungstag der Anmeldung: 12.02.2020
(73) Patentinhaber: Bundesdruckerei GmbH, 10969 Berlin (DE)
(72) Erfinder: Gümmer, Andreas, 27308 Hohenaverbergen (DE)
(74) Vertreter: Mammel und Maser

(56) Entgegenhaltungen:
- EP-A1- 3 412 458
- DE-A1-102009 014 249

## Beschreibung

Die Erfindung betrifft ein Verfahren sowie eine Laminiervorrichtung zum Laminieren eines aus mehreren Substratschichten bestehenden Stapels zu einem Verbundkörper, insbesondere Dokumentenkörper, wie beispielsweise einem Sicherheitsdokument.

Aus der DE 10 2015 205 539 A1 sind ein Verfahren und eine Vorrichtung zum Laminieren eines mehrschichtigen Sicherheitsdokumentenkörpers bekannt, bei welchem eine thermische Presse mit mindestens einem beweglichen Stempel eingesetzt wird. Diese thermische Presse umfasst einen oberen bewegbaren Stempel und einen unteren unbewegbaren Stempel. Dem jeweiligen Stempel zugeordnet ist jeweils ein Presspolster. An diesem anliegend ist jeweils ein Laminierblech vorgesehen. Zwischen den Laminierblechen ist ein Stapel von Substratschichten vorgesehen, welcher durch die thermische Presse laminiert wird. Zur Erhöhung der Stückzahl bei der Produktion von solchen Verbundkörpern, insbesondere Dokumentenkörpern, ist vorgesehen, dass mehrere thermische Pressen in Reihe hintereinander in Betrieb genommen werden, um in einem mehrstufigen Kurztakt zu arbeiten. Beispielsweise sind zwei aufeinanderfolgende Heizpressen und zwei aufeinanderfolgende Kühlpressen vorgesehen. In der ersten Heizpresse werden beispielsweise das Laminierblech, das Presspolster und der Stapel vorgewärmt. In der zweiten Heizpresse wird der Stapel auf eine Laminiertemperatur aufgeheizt, sodass die einzelnen Schichten miteinander laminiert werden. In der ersten darauffolgenden Kühlpresse wird der Stapel in einer ersten Stufe gekühlt und darauffolgend in der zweiten Kühlpresse vollständig abgekühlt.

Aus der DE 10 2009 014 249 A1 ist eine Laminiervorrichtung zum Laminieren einer folienbandartigen mehrschichtigen thermoplastischen Folienanordnung bekannt. Diese Laminiervorrichtung umfasst eine Heizeinrichtung und eine Kühleinrichtung, die in Durchlaufrichtung der bandartigen Folie hintereinander angeordnet sind. Durch diese hintereinander gereihte Anordnung der Heiz- und Kühleinrichtung kann in aufeinanderfolgenden Schritten die Folienanordnung in einem Arbeitsschritt laminiert und in dem darauffolgenden Arbeitsschritt in der nächsten Station gekühlt werden. Gemäß einer weiteren Ausgestaltung dieser Laminiervorrichtung werden nach dem Laminieren der Folienanordnung die beidseitig zur Folienanordnung angeordneten Heizeinrichtungen jeweils auseinandergefahren, sodass in dieser oberen und unteren Position der Heizeinrichtung der Kühlblock eingefahren wird und darauffolgend mittels Pressen der Heizblock auf den Kühlblock wirkt, um diesen Kühlblock auf die Folienanordnung zum Kühlen in der Laminierposition niederzuhalten. Diese Anordnung ist bezüglich des Bauraumes aufwändig als auch in der Konstruktion kostenintensiv.

Der Erfindung liegt die Aufgabe zugrunde, eine Laminiervorrichtung sowie ein Verfahren zum Laminieren eines aus mehreren Substratschichten bestehenden Stapels zu einem Verbundkörper zu schaffen, bei welchem die Laminationszeit reduziert wird.

Diese Aufgabe wird durch eine Laminationsvorrichtung zum Laminieren eines aus mehreren Substratschichten bestehenden Stapels zu einem Verbundkörper, insbesondere Dokumentenkörper, gelöst, bei der oberhalb des Pressentischs eine Heizeinrichtung und eine Kühleinrichtung vorgesehen sind, die eine gemeinsam verfahrbare obere Laminiereinheit bilden, welche thermisch zueinander entkoppelt sind und zur jeweiligen Anordnung der Heizeinrichtung oder Kühleinrichtung zur Arbeitsposition die obere Laminiereinheit verfahrbar ist und bei der unterhalb des Pressentisches eine untere Heizeinrichtung und eine untere Kühleinrichtung vorgesehen sind, die eine gemeinsam verfahrbare untere Laminiereinheit bilden, wobei die Heizeinrichtung und die Kühleinrichtung thermisch zueinander entkoppelt sind und zur jeweiligen Anordnung der Heizeinrichtung oder Kühleinrichtung zur Arbeitsposition die untere Laminiereinheit verfahrbar ist.

Diese beidseitig zum Stapeln angeordnete obere und untere Laminiereinheit ermöglicht eine schnellere Erwärmung der Substratschichten des Stapels als auch eine schnellere Abkühlung des laminierten Verbundkörpers, obwohl beim Verfahren der oberen und unteren Laminiereinheit sowohl die Heizeinrichtung gemeinsam beziehungsweise gleichzeitig verfahren werden.

Bevorzugt wird durch eine synchrone Ansteuerung zum Verfahren der oberen und unteren Laminiereinheit innerhalb der Laminiervorrichtung ein schneller Wechsel zwischen dem Laminieren und Kühlen erzielt.

Des Weiteren ist bevorzugt an dem Grundkörper eine Führungseinrichtung vorgesehen, durch welche die obere und untere Laminiereinheit abwechselnd aus einer Ruheposition in eine Arbeitsposition überführbar sind. Durch eine einfache Verfahrbewegung der Laminiereinheiten beziehungsweise der jeweiligen Heiz- und Kühleinrichtung entlang der Führungseinrichtung können die Heiz- und Kühleinrichtungen außerhalb einer Arbeitsposition in der Laminationsvorrichtung positioniert werden, um ein schnelles Be- und Entladen des Stapels zu ermöglichen. Darauffolgend kann ein schneller Wechsel zwischen der Heiz- und Kühlvorrichtungen durch eine einfache Verfahrbewegung zum zumindest einen Niederhalter und/oder Laminierblech erfolgen, wodurch die Prozesszeiten reduziert werden können.

Bevorzugt weisen die Heizeinrichtung und die Kühleinrichtung jeweils eine Auflagefläche auf, welche in der Arbeitsposition zur Anlage an dem zumindest einen Niederhalter und/oder Laminierblech überführbar ist. Dadurch kann eine vollflächige Kontaktierung und maximale Energieübertragung erzielt werden.

Vorteilhafterweise weist die Heiz- und Kühleinrichtung jeweils der Auflagefläche gegenüberliegend eine Druckfläche auf, an welcher ein Pressenstempel oder eine Druckplatte eines beweglichen Stempels positionierbar ist. Dies ermöglicht, dass nach dem Positionieren der Heizeinrichtung oder Kühleinrichtungen in der Arbeitsposition die Heiz- oder Kühleinrichtungen über den Pressenstempel auf den zumindest einen Niederhalter und/oder das zumindest eine Laminierblech zubewegt wird, sodass eine vollflächige Kontaktierung erfolgt. Darüber hinaus kann diese Kraft des Pressenstempels über die Heiz- oder Kühleinrichtungen, den zumindest einen Niederhalter und/oder das zumindest eine Laminier-blech auf den Stapel übertragen werden, um die Lamination unter Druck und Temperatur durchzuführen.

Die Führungseinrichtung zur verfahrbaren Aufnahme der Heiz- und Kühleinrichtung ist bevorzugt an dem Grundkörper mittels einer Federlagerung befestigt. Dadurch ist bei dem Ausüben einer Presskraft mittels des Pressstempels auf die Heiz- oder Kühleinrichtung eine Verfahrbewegung auf den Stapel zugerichtet ermöglicht. Während dem Wechsel zwischen der Heiz- und Kühleinrichtung kann die Führungseinrichtung die Heiz- und Kühleinrichtung geringfügig gegenüber dem Niederhalter abheben, sodass eine freie Verfahrbewegung ermöglicht wird, bevor darauffolgend die Kühl- oder Heizeinrichtung zum Niederhalter wieder niedergedrückt wird.

Die obere Heiz- und Kühleinrichtung als auch die untere Heiz- und Kühleinrichtung sind jeweils bevorzugt als eine gemeinsam verfahrbare Laminiereinheit ausgebildet. Dies vereinfacht die Ansteuerung der Laminiervorrichtung zum Heizen und Kühlen des Stapels. Durch die thermische Trennung mit einem Isoliermaterial zwischen der Kühl- und Heizeinrichtung ist eine gegenseitige thermische Beeinträchtigung verhindert. Die Heiz- als auch Kühleinrichtung können gleichzeitig auf Betriebstemperatur bereitgestellt sein.

Der Niederhalter kann als Laminierblech ausgebildet sein. Alternativ kann an dem Niederhalter auch das Laminierblech, vorzugsweise auswechselbar, befestigt sein.

Auf dem Pressentisch kann bevorzugt ein Werkstückträger positionierbar sein, der von einer Transportvorrichtung zur Laminiervorrichtung zum Laminieren des Stapels überführbar und nach dem Laminieren wieder zur Transportvorrichtung zurückführbar ist. Dadurch kann eine solche Laminiervorrichtung in eine Prozessautomation eingebunden werden, bei welcher der Werkstückträger den Stapel von Substratschichten oder den Verbundkörper von Station zu Station transportiert.

Des Weiteren ist bevorzugt der Pressentisch der Laminiervorrichtung als eine Platte mit einer Durchbrechung ausgebildet, welcher an dem Grundkörper vorgesehen ist. Zum Laminieren und Kühlen des Stapels ist der Werkstückträger bevorzugt auf dem Pressentisch positionierbar. Durch die Ausgestaltung der Durchbrechung im Pressentisch ist der vom Werkstückträger aufgenommene Stapel sowohl von einer Oberseite als auch einer Unterseite durch die jeweilige Heiz- und Kühleinrichtung der jeweiligen Arbeitstemperatur beaufschlagbar.

Dem Pressentisch ist bevorzugt ein oberer und ein unterer Niederhalter und/oder ein oberes und unteres Laminierblech zugeordnet. Die Laminierbleche können wahlweise jeweils zur Arbeitsposition oder Laminierposition verfahren werden, sodass diese dem Pressentisch für das Laminieren des Stapels zugeordnet sind, wohingegen beim Kühlen des laminierten Stapels die Kühleinrichtung unmittelbar an dem Stapel angreifen kann oder unter Zwischenschaltung eines Niederhalters daran angreifen kann.

Der Werkstückträger weist bevorzugt einen Aufnahmerahmen mit einer Ausnehmung für die zumindest eine Substratschicht auf, und an zumindest einer Seitenkante der Ausnehmung ist eine Fixiereinrichtung zum Halten der Substratschichten in dem Aufnahmerahmen vorgesehen. Dies ermöglicht, dass die einzelnen Substratschichten bereits vor dem Laminieren in einer definierten Lage zueinander ausgerichtet sind und auch während dem Laminieren in dieser ausgerichteten Position zueinander gehalten werden können. Bevorzugt kann es sich bei dieser Fixiereinrichtung um ein Klemmelement handeln. Alternativ kann diese Fixiereinrichtung auch durch Stifte oder Dorne ausgebildet sein, welche die jeweilige Substratschicht durchdringen.

Der Grundkörper der Laminiervorrichtung weist bevorzugt einen C-förmigen Maschinenrahmen auf, welcher an einem oberen und einem unteren Schenkel den Pressenstempel aufnimmt. Diese C-förmigen Maschinenrahmen weisen den Vorteil auf, dass eine gute Zugänglichkeit zum Pressentisch gegeben ist. Insbesondere kann dadurch ein Werkstückträger in einfacher Weise durch die Laminiervorrichtung hindurchgeführt werden. Dadurch lässt sich eine solche Laminationsvorrichtung einfach in einen Automatisierungsprozess einbinden.

Des Weiteren ist bevorzugt seitlich zum Grundkörper der zumindest eine Niederhalter positioniert, der mit einer Verfahreinrichtung aus einer Freigabeposition in eine Halteposition überführbar ist. Die unabhängige Ansteuerung des Niederhalters zur Kühl- und Heizeinrichtung weist den Vorteil auf, dass bei einem Wechsel zwischen der Heiz- und Kühleinrichtung der laminierte Stapel in seiner Lage durch den Niederhalter fixiert gehalten bleibt. Dadurch kann die Qualität zur Herstellung des Verbundkörpers erhöht sein.

Die der Erfindung zugrundeliegende Aufgabe wird des Weiteren durch ein Verfahren zum Laminieren eines aus mehreren Substratschichten bestehenden Stapels zu einem Verbundkörper gelöst, bei dem ein Stapel aus mehreren Substratschichten in einer Vorrichtung, insbesondere in eine Laminiervorrichtung, nach einem der vorhergehenden Ausführungsformen einem Pressentisch in einer Arbeitsposition zugeordnet wird, bei dem zumindest ein Niederhalter und/oder zumindest ein Laminierblech in eine Halteposition übergeführt und der Stapel fixiert wird, bei dem zum Aufheizen und Laminieren des Stapels eine obere und untere Heizeinrichtung der oberen und unteren Laminiereinheit in eine Arbeitsposition zum Pressentisch verfahren werden, bei dem zumindest ein beweglicher Stempel während einer Heizphase die obere und die untere Heizeinrichtung auf den zumindest einen Niederhalter und/oder das zumindest eine Laminierblech drücken und eine Wärme- und Druckübertragung in den Stapel eingeleitet wird, bei dem nach dem Laminieren des Stapels der zumindest eine bewegliche Stempel nach oben und unten bewegt und die obere und untere Heizeinrichtung gegenüber dem Pressentisch abgehoben und darauffolgend in eine Ruheposition verfahren wird, bei dem nach dem Überführen der Heizeinrichtung aus der Arbeitsposition in die Ruheposition der Stapel durch den zumindest einen Niederhalter und/oder das zumindest eine Laminierblech fixiert gehalten bleibt, bei dem die obere und untere Kühleinrichtung während dem Überführen der oberen und unteren Heizeinrichtung in die Ruheposition und gleichzeitig in die jeweilige Arbeitsposition übergeführt werden, wobei die obere Heizein-richtung und obere Kühleinrichtung eine gemeinsame verfahrbare obere Laminiereinheit bilden sowie die untere Heizeinrichtung und die untere Kühleinrichtung eine gemeinsame verfahrbare untere Lami--niereinheit bilden, bei dem durch den zumindest einen beweglichen Stempel die obere und untere Kühleinrichtung während der Kühlphase auf den zumindest einen Niederhalter und/oder das zumindest eine Laminierblech gedrückt gehalten werden und bei dem nach der Kühlphase die obere und untere Kühleinrichtung aus der jeweiligen Arbeitsposition in die jeweilige Ruheposition verfahren werden und bei dem der zumindest eine Niederhalter und/oder das zumindest eine Laminierblech in eine Freigabeposition übergeführt wird und der laminierte Verbundkörper mit dem Werkstückträger aus der Laminierposition herausgeführt wird.

Dieses Verfahren ermöglicht innerhalb einer Laminiervorrichtung ein Aufheizen des Stapels auf Laminiertemperatur und ein abschließendes Abkühlen des Stapels, wobei während dem Laminieren und Kühlen sowie während dem Wechsel zwischen der Kühleinrichtung und der Heizeinrichtung der Stapel durch den zumindest einen Niederhalter und/oder das zumindest eine Laminierblech in einer definierten Lage zum Pressentisch gehalten wird. Dadurch kann die Prozesszeit verringert werden. Auch kann die Energie für das Aufheizen und Abkühlen des Stapels reduziert werden, da lediglich der Niederhalter und das Laminierblech als thermische Masse wirken.

Des Weiteren werden eine obere Laminiereinheit, welche die obere Heiz- und Kühleinrichtung umfasst, und eine untere Laminiereinheit, welche die untere Heiz- und Kühleinrichtung umfasst, aufeinanderfolgend oder mit voneinander abweichenden Hubgeschwindigkeiten oder synchron auf den Stapel zubewegt. Dabei können voneinander abweichende, insbesondere gleiche, Temperaturen eingebracht und/oder Arbeitsdrücke aufgebracht werden.

Nach einer bevorzugten Ausgestaltung des Verfahrens ist vorgesehen, dass der Niederhalter mit einer voreingestellten Kraft auf den Stapel drückt. Durch diese Vorfixierung liegen die einzelnen Substratschichten bereits vor dem Beginn der Heizphase vollflächig aneinander, wodurch eine Verkürzung der Aufheizphase erzielt werden kann.

Des Weiteren weisen die Heiz- und Kühleinrichtung beim Betrieb der Laminiervorrichtung auch in der Ruheposition jeweils eine Arbeitstemperatur auf. Dies bedeutet, dass die Heizeinrichtung auch benachbart zur Arbeitsposition, also in der Ruheposition, auf die Laminiertemperatur aufgeheizt ist und die Kühleinrichtung auf die dafür vorgesehene Kühltemperatur, sodass unmittelbar nach dem Positionieren der Kühl- oder Heizeinrichtung in der Arbeitsposition der jeweilige Prozess sofort durchgeführt werden kann.

Des Weiteren wird während dem Laminieren des Stapels die Temperatur mit zumindest einem Temperatursensor, die Höhe des Stapels mit einem Abstandssensor, die Druckkraft auf den Stapel mit einem Kraftsensor und/oder die Laminations- und Kühldauer mit einem Zeitmesser überwacht. Dadurch kann eine Prozessüberwachung erzielt werden, um gleichzeitig festzustellen, ob der hergestellte Verbundkörper ein Gutteil oder ein Ausschussteil darstellt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Seitenansicht einer Laminiervorrichtung,
Figur 2 eine schematische Ansicht von vorne auf die Laminiervorrichtung gemäß Figur 1,
Figur 3 eine perspektivische Ansicht eines Werkstückträgers, und
Figur 4 eine schematische Schnittansicht des Werkstückträgers gemäß Figur 3.

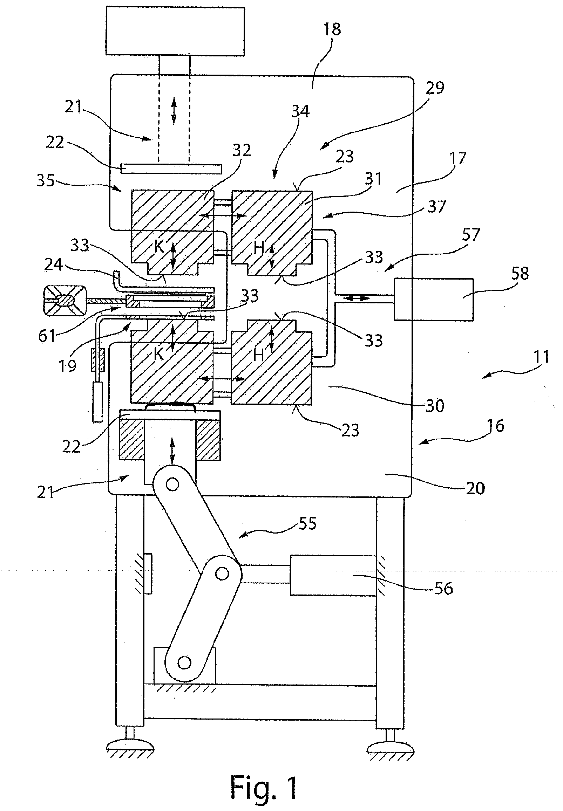

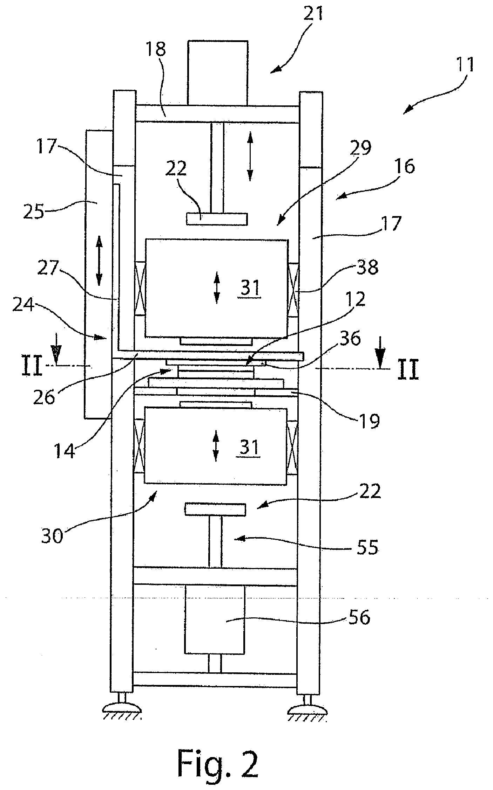

In Figur 1 ist eine schematische Seitenansicht einer erfindungsgemäßen Laminiervorrichtung 11 dargestellt. Die Figur 2 zeigt eine schematische Ansicht von vorne auf die Laminiervorrichtung 11 gemäß Figur 1. Diese Laminiervorrichtung 11 ist zum Laminieren eines aus mehreren Substratschichten 12 bestehenden Stapels 14 zu einem Verbundkörper vorgesehen. Dieser Verbundkörper kann als ein Dokumentenkörper, insbesondere als ein Sicherheitsdokument oder Wertdokument, ausgebildet sein. Auch weitere Identifikationsdokumente oder Scheckkarten, Visa-Karten oder dergleichen können durch den Verbundkörper gebildet werden. Im Fall eines Sicherheitsdokumentenkörpers kann beispielsweise ein ID3-Dokument oder ein ID1-Dokument vorgesehen sein. Das ID1-Dokument kann beispielsweise aus 3 bis 15 Substratschichten bestehen und in einer Arbeitsposition, wie nachfolgend beschrieben sein wird, laminiert werden. Auch können Sicherheitsdokumente mit einem RFID-Chip oder andere elektronische Bauelemente, sogenannte Inlays, zwischen den Substratschichten oder innerhalb der Substratschichten vorgesehen sein, die nach dem Laminieren einen Verbundkörper bilden. Dieser Verbundkörper kann in einem nachfolgenden Schneid- und/oder Stanzprozess auf ein Endformat geschnitten werden. Auch ist möglich, dass die Substratschichten bereits in einem Endformat beigefügt werden, sodass nach dem Laminieren der Verbundkörper ein Endformat aufweist.

Als Substratschichten 12 werden beispielsweise thermoplastische Schichten eingesetzt, insbesondere Polycarbonat. Weitere Materialien, die durch Druck und Temperatur mit einem weiteren Material laminiert werden können, finden ebenso Einsatz.

Die Laminiervorrichtung 11 umfasst einen Grundkörper 16, der beispielsweise als ein C-förmiger Maschinenrahmen 17 ausgebildet ist. Dieser C-förmige Maschinenrahmen 17 umfasst einen oberen Querträger 18 und einen unteren Querträger 20. An dem oberen Querträger 18 und dem unteren Querträger 20 ist jeweils eine obere Laminiereinheit 29 und eine untere Laminiereinheit 30 angeordnet. Die obere Laminiereinheit 29 umfasst eine Heizeinrichtung 31 und eine Kühleinrichtung 32. Die untere Laminiereinheit 30 umfasst ebenfalls eine Heizeinrichtung 31 und eine Kühleinrichtung 32. Vorzugsweise sind die obere und untere Laminiereinheit 29, 30 identisch aufgebaut.

Zwischen der oberen und unteren Laminiereinheit 29, 30 ist ein Pressentisch 19 vorgesehen, der ebenfalls am Grundkörper 16 befestigt ist oder dem Grundkörper 16 zwischen der oberen und unteren Laminiereinheit 29, 30 zugeordnet ist.

Der Stempel 21 ist durch eine Presse zu einer Verfahrbewegung ansteuerbar. Dies kann bevorzugt eine hydraulische Presse, ein Druckzylinder oder dergleichen sein. Alternativ zum beweglichen Stempel 21 kann auch ein Kniehebelmechanismus 55 vorgesehen sein, der mittels eines Druckzylinders 56 ansteuerbar ist, um die Druckplatte 22 in der Höhe verfahrbar anzusteuern. Alternativ zum Kniehebelmechanismus 55 können weitere Antriebmechanismen vorgesehen sein, die aufgrund deren Hebelverhältnisse eine Kraftverstärkung ermöglichen.

Im oberen und unteren Querträger 18, 20 ist jeweils ein beweglicher Stempel 21 vorgesehen, der relativ zum Pressentisch 19 auf- und ab bewegbar ist. Dieser bewegliche Stempel 21 umfasst eine Druckplatte 22, welche in der Höhe verfahrbar ansteuerbar ist. Des Weiteren kann ein solcher Niederhalter 24 auch an einer Unterseite des Pressentisches 19 vorgesehen sein. Dieser kann dabei analog zum oberen Niederhalter ausgebildet und angeordnet als auch ansteuerbar sein.

Die obere und untere Laminiereinheit 29, 30 sind in Bezug auf die jeweilige Heizeinrichtung 31 in einer Arbeitsposition 35 angeordnet. In dieser Arbeitsposition der Heizeinrichtung 31 kann nach der Zustellbewegung auf den Stapel 14 das Heizen und Laminieren des Stapels 14 erfolgen. Daran anschließend kann die obere und untere Laminiereinheit 29, 30 durch eine Ansteuerungseinrichtung 57 vorzugsweise gleichzeitig verfahren werden, sodass die Kühleinrichtung 32 in die Arbeitsposition 35 übergeführt wird, wobei die Heizeinrichtungen 31 in eine Ruheposition außerhalb des C-förmigen Rahmens anordenbar sind. Diese Antriebseinrichtung 57 kann beispielsweise ein Druckzylinder 58 mit einem Stellmechanismus sein, der an der oberen und unteren Laminiereinheit 29, 30 angreift und durch welchen die obere und untere Laminiereinheit 29, 30 relativ zum C-förmigen Rahmen 17 verfahrbar sind.

Seitlich zum C-förmigen Maschinenrahmen 17 ist der zumindest eine Niederhalter 24 zugeordnet, der durch eine Verfahreinrichtung 25, die an dem C-förmigen Maschinenrahmen 17 befestigt ist, auf- und ab bewegbar, also parallel zum beweglichen Stempel 21 auf- und ab bewegbar, ist. Dieser Niederhalter 24 ist beispielsweise L-förmig ausgebildet, sodass ein L-förmiger Schenkel 26 parallel zum Pressentisch 19 ausgerichtet und der zweite L-förmige Schenkel 27 an der Verfahreinrichtung 25 befestigt ist. Alternativ zum zweiten Schenkel 27 können auch Streben oder andere Befestigungsmöglichkeiten vorgesehen sein.

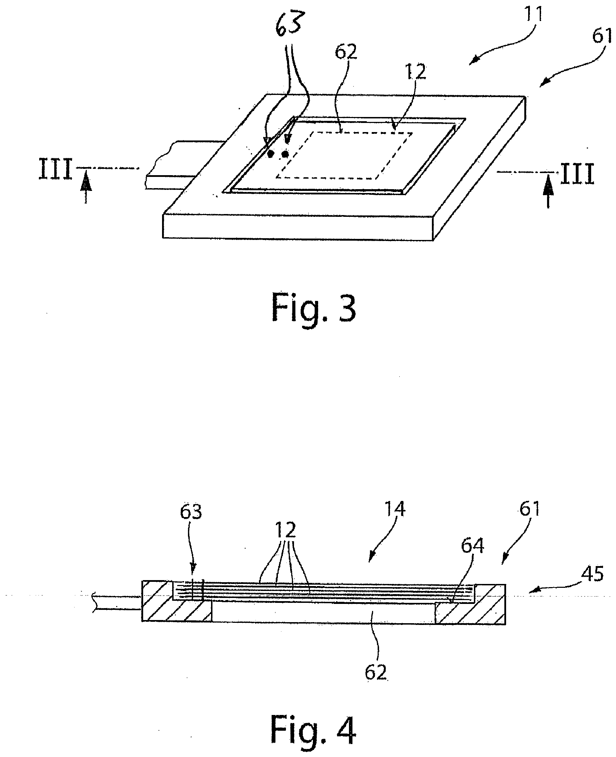

In Figur 3 ist perspektivisch ein Werkstückträger 45 dargestellt. Figur 4 zeigt eine schematische Schnittansicht des Werkstückträgers 45. Der Werkstückträger 45 umfasst einen Aufnahmerahmen 61 mit einer Ausnehmung 62, wobei durch den die Ausnehmung 62 gebildeten umlaufenden Aufnahmerahmen 61 eine Auflagefläche 64 für die Substratschichten 12 gebildet ist. Die Ausnehmung 62 entspricht in der Größe den Anlageflächen 33 der Heiz- und Kühleinrichtung 31, 32 oder ist geringfügig kleiner. Die Größe der Ausnehmung 62 ist bevorzugt derart gewählt, dass diese gleich groß oder größer als ein Endformat des herzustellenden Verbundkörpers ist. Entlang einer Seitenkante des Aufnahmerahmens 61 ist zumindest eine Fixiereinrichtung 63 vorgesehen. Gemäß einer Ausführungsform kann es sich hierbei um zwei zueinander beabstandete Stifte, Dorne, Nadeln oder dergleichen handeln, welche die jeweilige Substratschicht 12 durchdringen und dadurch eine Positionierung und Ausrichtung der Substratschicht 12 in dem Aufnahmerahmen 61 ermöglichen. Die beispielsweise als Dorne ausgebildeten Fixiereinrichtungen 63 sind bevorzugt in der Längsachse des herzustellenden Kartenkörpers ausgerichtet. Dadurch kann eine wellenfreie Ausdehnung der Schichten 12 ermöglicht sein. Bevorzugt ist die umlaufende Auflagefläche 64 für einen Randbereich der Substratschicht 12 gebildet. Dies ermöglicht, dass die Substratschichten 12 in einer der Laminiervorrichtung 11 vorausgehenden Bearbeitungsstation dem Werkstückträger 45 zugeführt und positioniert werden. Des Weiteren können vor dem Zuführen des Werkstückträgers 45 in die Laminierstation einzelne Substratschichten 12 bedruckt und/oder Sicherheitsmerkmale auf oder zwischen die Substratschichten 12 eingebracht werden. Auch kann das Aufbringen eines IC-Chips oder einer Transpondereinheit vorgesehen sein.

Ein solcher Werkstückträger 45 mit darin aufgenommenen Substratschichten 12 wird dem Pressentisch 19 zugeführt. Der Pressentisch 19 weist bevorzugt eine Durchbrechung auf, die im Format und/oder der Größe der Ausnehmung 62 entspricht. Dadurch kann die Anlagefläche 33 der Heiz- und Kühleinrichtung 31, 32 durch den Pressentisch 19 hindurch zur Anlage an der untersten Substratschicht 12 gebracht werden. Alternativ kann der untere Niederhalter 24 und/oder das untere Laminierblech 36 entsprechend ausgebildet sein, damit die Heiz- und Kühleinrichtung 31, 32 jeweils die Arbeitsposition zum Stapel 14 einnehmen können.

In dieser in Figur 1 dargestellten Arbeitsposition 35 sind die Heiz- oder Kühleinrichtung 31, 32 oberhalb des L-förmigen Schenkels 26 des Niederhalters 24 positioniert, sodass die Heiz- oder Kühltemperatur unmittelbar über den Niederhalter 24 auf den Stapel 14 einwirken kann.

Die Heiz- und Kühleinrichtungen 31, 32 sind beispielsweise als eine gemeinsame verfahrbare Laminiereinheit 29, 30 ausgebildet. Diese gemeinsame verfahrbare Laminiereinheit 29, 30 ist von einer Führungseinrichtung 37 getragen, welche sich vorzugsweise zwischen den beiden C-förmigen Maschinenrahmen 17 erstreckt. Bei der Führungseinrichtung 37 kann es sich beispielsweise um eine Linearführung handeln, durch welche eine Ein- und Ausfahrbewegung der Heiz- und/oder Kühleinrichtungen 31, 32 in und aus der Arbeitsposition 35 ansteuerbar ist. Die Führungseinrichtung 37 ist jeweils in Zustellrichtung des beweglichen Stempels 21 durch ein Lager 38 federnd nachgiebig gelagert. Insbesondere durch eine Federlagerung 38 wird bei der Einbringung einer Presskraft über den beweglichen Stempel 21 beispielsweise auf die in der Arbeitsposition 35 positionierte Heizeinrichtung 31 eine Zustellbewegung der Heizeinrichtung 31 in Richtung auf den Niederhalter 24 ermöglicht. Diese Presskraft wird dann über die an einer Druckfläche 23 der Heizeinrichtung 31 angreifenden Druckplatte 22 in die Heizeinrichtung 31 eingebracht. Von der Heizeinrichtung 31 wird die Druckkraft über eine Auflagefläche 33 der Heizeinrichtung 31 auf den oberen und/oder unteren Niederhalter 24 und/oder das Laminierblech 36 übertragen. Die eingeleitete Druckkraft und Temperatur werden über den Niederhalter 24 und/oder das Laminierblech 36 auf den Stapel 14 übergeführt. Analoges gilt bei der Positionierung der Kühleinrichtung 32 in der Arbeitsposition 35.

An einer zum Stapel 14 weisenden Seite des Niederhalters 24, insbesondere des L-förmigen Schenkels 26, kann auswechselbar ein Laminier-blech 36 vorgesehen sein. Durch ein solches Laminierblech 36 können Oberflächenstrukturen in die oberste Schicht des Stapels 14 eingebracht werden.

Analoges gilt für die unterste Schicht des Stapels 14.

Nachfolgend wird ein Verfahren zum Laminieren eines aus mehreren Substratschichten 12 bestehenden Stapels 14 zu einem Verbundkörper näher erörtert. Ein Werkstückträger 45 wird beispielsweise mittels einer Transportfördereinrichtung, die nicht näher dargestellt ist, der Laminiervorrichtung 11 zugeführt. Dies kann beispielsweise über eine Handhabungseinrichtung oder durch die Transportvorrichtung selbst erfolgen. Der Werkstückträger 45 mit den darauf aufgebrachten Substratschichten 12, die in einem Stapel 14 übereinanderliegen, wird zum Pressentisch 19 positioniert. Der Werkstückträger 45 kann über die Zentrierelemente 43 zum Pressentisch 19 ausgerichtet werden.

Anschließend wird der obere und/oder untere Niederhalter 24 auf den Stapel 12 zubewegt. Der jeweilige Niederhalter 24 wird mit einer vorbestimmten Kraft in eine Halteposition übergeführt. In dieser Halteposition sind die Substratschichten 12 eng aufeinanderliegend beziehungsweise zumindest geringfügig aufeinander gepresst positioniert und fixiert.

Daraufhin wird die Heizeinrichtung 31 der oberen und unteren Laminiereinheit 29, 30 aus der Ruheposition 34 in die Arbeitsposition 35 übergeführt. Die Kühleinrichtung 32 wird dabei nach links verfahren und ist beispielsweise außerhalb des C-förmigen Rahmens 17 positioniert. In der Ruheposition 34 ist bevorzugt die Heizeinrichtung 31 bereits auf eine Laminiertemperatur aufgeheizt. Die Heizeinrichtung 31 kann beispielsweise aus elektrisch aufheizbaren Heizpatronen entstehen.

In der Arbeitsposition 35 der Heizeinrichtungen 31 werden die beweglichen Stempel 21 aktiviert, wodurch die Druckplatte 22 an der Druckfläche 23 auf der jeweiligen Heizeinrichtung 31 aufliegen und zur Anlage mit dem Niederhalter 24 übergeführt werden. Dabei werden die beweglichen Stempel 21 mit einem vorbestimmten Weg und einer vorbestimmten Druckkraft beaufschlagt. Die Laminiereinheiten 29, 30 werden auf-einander zubewegt.

Anschließend erfolgt ein Aufheizen und Laminieren der Substratschichten 12 zu einem Verbundkörper. Die Laminierung des Verbundkörpers wird durch Sensoren überwacht. Zum einen wird mittels eines Drucksensors eine Druckkraft überwacht, mit einem Abstandssensor ein Weg des Stempels 21 oder des Niederhalters 24, mit einem Temperatursensor die Laminiertemperatur und mit einem Zeitmesser die Laminierdauer überwacht. Alle Sensoren führen zu einer nicht näher dargestellten Steuerungseinrichtung, welche zur Ansteuerung der Laminiervorrichtung 11 dient.

Am Ende des Laminierzyklusses werden die beweglichen Stempel 21 wieder nach oben und unten gefahren. Dementsprechend heben die Heizeinrichtungen 31 von den Niederhaltern 24 ab. Die Niederhalter 24 bleiben in der voreingestellten Position beziehungsweise in Halteposition, welche sich nach dem Laminieren des Stapels 14 einstellt.

Die abgehobenen Heizeinrichtungen 31 werden in die Ruheposition 34 und die Kühleinrichtungen 32 in die Arbeitsposition 35 verfahren, wie dies gemäß Figur 1 dargestellt ist. Darauffolgend werden wiederum die beweglichen Stempel 21 aktiviert und drücken die Kühleinrichtungen 32 vollflächig an die Niederhalter 24.

Die Kühleinrichtung 32 wird bevorzugt mit Kühlwasser gespeist. Alternativ kann auch ein öl- oder gelförmiges Medium vorgesehen sein.

Nach dem Kühlzyklus werden die beweglichen Stempel 21 abgehoben. Die Kühleinrichtungen 32 heben von den Niederhaltern 24 ab. Darauffolgend wird der Niederhalter 24 angehoben. Der Werkstückträger 45 kann aus der Laminiervorrichtung 11 herausgeführt und mittels der Transportvorrichtung zu einer weiteren Bearbeitungsstation verfahren oder einem Magazin zum Stapeln der Verbundkörper übergeführt werden oder für einen weiteren Bearbeitungsschritt bereitstehen.

### Bezugszeichenliste

| | |
|---|---|
| 11. Laminiervorrichtung | 33. Anlagefläche |
| 12. Substratschicht | 34. Ruheposition |
| 14. Stapel | 35. Arbeitsposition |
| 16. Grundkörper | 36. Laminierblech |
| 17. C-förmiger Maschinenrahmen | 37. Führungselement |
| 18. Querträger, oben | 38. Lager |
| 19. Pressentisch | 41. Auflagefläche |
| 20. Querträger, unten | 43. Zentrierelement |
| 21. Beweglicher Stempel | 45. Werkstückträger |
| 22. Druckplatte | 47. Zentrierstift |
| 23. Druckfläche | 55. Kniehebelmechanismus |
| 24. Niederhalter | 56. Zylinder |
| 25. Verfahreinrichtung | 57. Ansteuerungseinrichtung |
| 26. L-förmiger Schenkel | 58. Druckzylinder |
| 27. L-förmiger Schenkel | 61. Aufnahmerahmen |
| 29. Obere Laminiereinheit | 62. Ausnehmung |
| 30. Untere Laminiereinheit | 63. Fixiereinrichtung |
| 31. Heizeinrichtung | 64. Auflagefläche |
| 32. Kühleinrichtung | |

## Patentansprüche

1. Laminiervorrichtung zum Laminieren eines aus mehreren Substratschichten (12) bestehenden Stapels (14) zu einem Verbundkörper, insbesondere Dokumentenkörper, mit einem Grundkörper (16), mit einem Pressentisch (19), auf dem oder zu dem der Stapel (14) in einer Arbeitsposition (35) zur Bildung des Verbundkörpers positionierbar ist, mit einer oberhalb des Pressentischs (19) vorgesehenen Heizeinrichtung (31) und Kühleinrichtung (32), die eine obere Laminiereinheit (29) bilden, die thermisch zueinander entkoppelt sind und zur jeweiligen Anordnung der Heizeinrichtung (31) oder Kühleinrichtung (32) in einer Arbeitsposition (35) die obere Laminiereinheit (29) verfahrbar ist, **dadurch gekennzeichnet,**
- **dass** unterhalb des Pressentisches (19) eine Heizeinrichtung (31) und eine Kühleinrichtung (32) vorgesehen sind, die eine untere Laminiereinheit (30) bilden, die thermisch zueinander entkoppelt sind und zur jeweiligen Anordnung der Heizeinrichtung (31) oder Kühleinrichtung (32) in die Arbeitsposition (35) die untere Laminiereinheit (30) verfahrbar ist, und dass die Heiz- und Kühleinrichtung (31, 32) der oberen Laminiereinheit (29) und die Heiz- und Kühleinrichtung (31, 32) der unteren Laminiereinheit (30) jeweils als gemeinsam verfahrbare Laminiereinheit (29, 30) ausgebildet sind.

2. Laminiervorrichtung nach Anspruch 1, **dadurch gekennzeichnet, dass** die obere und untere Laminiereinrichtung (29, 30) synchron in die Arbeitsposition (35) verfahrbar sind.

3. Laminiervorrichtung nach Anspruch 1, **dadurch gekennzeichnet, dass** an dem Grundkörper (16) eine Führungseinrichtung (37) vorgesehen ist, durch welche die obere und untere Laminiereinheit (29, 30) jeweils abwechselnd aus einer Ruheposition (34) in eine Arbeitsposition (35) zu zumindest einem Niederhalter (24) und/oder zumindest einem Laminierblech (36) überführbar sind.

4. Laminiervorrichtung nach Anspruch 3, **dadurch gekennzeichnet, dass** die Heizeinrichtung (31) und die Kühleinrichtung (32) eine Auflagefläche (33) aufweisen, welche in der Arbeitsposition (35) zur Anlage an dem zumindest einen Niederhalter (24) und/oder dem zumindest einen Laminierblech (36) überführbar ist.

5. Laminiervorrichtung nach einem der vorhergehenden Ansprüche, **dadurch gekennzeichnet, dass** die Heizeinrichtung (31) und die Kühleinrichtung (32) eine Druckfläche (23) aufweisen, die in Richtung auf den beweglichen Stempel (21) ausgerichtet sind, an welcher der zumindest eine bewegbare Stempel (21) angreift.

6. Laminiervorrichtung nach Anspruch 4 oder 5, **dadurch gekennzeichnet, dass** der zumindest eine Niederhalter (24) das Laminierblech (36) vorzugsweise austauschbar aufnimmt oder dass dessen zum Stapel (14) weisende Seite als Laminierblech ausgebildet ist.

7. Laminiervorrichtung nach einem der vorhergehenden Ansprüche, **dadurch gekennzeichnet, dass** der Stapel (14) von Substratschichten (12) auf einem Werkstückträger (45) angeordnet ist, der von einer Transportvorrichtung in die Arbeitsposition (35) überführbar und nach dem Laminieren in eine weitere Arbeitsstation verfahrbar ist und vorzugsweise der Pressentisch (19) als eine Platte mit einer Durchbrechung ausgebildet ist, auf welcher der Werkstückträger (45) positionierbar ist.

8. Laminiervorrichtung nach Anspruch 7, **dadurch gekennzeichnet, dass** der Werkstückträger (45) einen Aufnahmerahmen (61) mit einer Ausnehmung (62) für die Anordnung der Substratschichten (12) aufweist und an zumindest einer Seitenkante des Aufnahmerahmens (61) eine Fixiereinrichtung (63) der Ausnehmung (62) zum Halten der Substratschichten (12) zugeordnet ist.

9. Laminiervorrichtung nach einem der vorhergehenden Ansprüche, **dadurch gekennzeichnet, dass** der Pressentisch (19) zumindest einem oberen und/oder unteren Niederhalter (24) und/oder Laminierblech (36) zugeordnet ist.

10. Laminiervorrichtung nach einem der vorhergehenden Ansprüche, **dadurch gekennzeichnet, dass** der Grundkörper (16) einen C-förmigen Maschinenrahmen (17) aufweist, welcher in einem oberen und unteren Bereich einen Querträger (18) zur jeweiligen Aufnahme des beweglichen Stempels (21) aufweist.

11. Laminiervorrichtung nach einem der Ansprüche 4 bis 10, **dadurch gekennzeichnet, dass** seitlich zum Grundkörper (16) der zumindest eine Niederhalter (24) positioniert ist, der mit einer Verfahreinrichtung (25) aus einer Freigabeposition in eine Halteposition zur Fixierung des Stapels (14), zum Werkstückträger (45) und/oder zum Pressentisch (19) überführbar ist.

12. Verfahren zum Laminieren eines aus mehreren Substratschichten (12) bestehenden Stapels (14) zu einem Verbundkörper,
- bei dem ein Stapel (14) aus mehreren Substratschichten (12) in der Laminiervorrichtung (11), insbesondere einer Laminier-vorrichtung nach einem der Ansprüche 1 bis 12, zum Laminieren einem Pressentisch (19) in einer Arbeitsposition zugeordnet wird,
- bei dem zumindest ein Niederhalter (24) und/oder zumindest ein Laminierblech (36) in eine Halteposition zum Stapel übergeführt und der Stapel (14) fixiert wird,
- bei dem zum Aufheizen und Laminieren des Stapels (14) eine obere und untere Heizeinrichtung (31) einer oberen und unteren Laminiereinheit (29, 30) in eine Arbeitsposition (35) zum Pressentisch (19) verfahren werden,
- bei dem zumindest ein beweglicher Stempel (21) während einer Heizphase die obere und untere Heizeinrichtung (31) auf den zumindest einen Niederhalter (24) und/oder das zumindest eine Laminierblech (36) drückt und eine Wärme- und Druckübertragung in den Stapel (14) eingeleitet wird,
- bei dem nach dem Laminieren des Stapels (14) der zumindest eine bewegliche Stempel (21) nach oben und unten bewegt und die Heizeinrichtung (31) gegenüber dem Pressentisch (19) abgehoben und darauffolgend in eine Ruheposition (34) verfahren wird,
- bei dem nach dem Überführen der Heizeinrichtung (31) aus der Arbeitsposition (35) in die Ruheposition (34) der Stapel (14) durch den zumindest einen Niederhalter (24) und/oder das zumindest eine Laminierblech (36) fixiert gehalten bleiben,
- bei dem die Kühleinrichtungen (32) der oberen und unteren Laminiereinheit (29, 30), die mit den Heizeinrichtungen (31) jeweils eine gemeinsam verfahrbare obere und untere Laminiereinheit (29, 30) bilden, während dem Überführen der Heizeinrichtungen (31) in die Ruheposition (34) gleichzeitig in die Arbeitsposition (35) übergeführt werden,
- bei dem durch den zumindest einen beweglichen Stempel (31) die Kühleinrichtungen (32) während der Kühlphase auf den zumindest einen Niederhalter (24) und/oder das zumindest eine Laminierblech (36) gedrückt werden und bei dem nach der Kühlphase die Kühleinrichtungen (32) aus der Arbeitsposition (35) in die Ruheposition (34) verfahren werden und
- bei dem der zumindest eine Niederhalter (24) und/oder das zumindest eine Laminierblech (36) in eine Freigabeposition übergeführt werden und der laminierte Verbundkörper aus der Arbeitsposition (35) herausgeführt wird.

13. Verfahren nach Anspruch 12, **dadurch gekennzeichnet, dass** die obere Laminiereinheit (29) und die untere Laminiereinheit (30) aufeinanderfolgend, mit voneinander abweichenden Zustellgeschwindigkeiten oder synchron auf den Stapel (14) zubewegt werden.

14. Verfahren nach Anspruch 12 oder 13, **dadurch gekennzeichnet, dass** die Heizeinrichtung (31) und Kühleinrichtung (32) beim Betrieb der Laminiervorrichtung (11) in der Ruheposition (34) und der Arbeitsposition (35) jeweils mit einer Arbeitstemperatur betrieben werden.

15. Verfahren nach einem der Ansprüche 12 bis 14, **dadurch gekennzeichnet, dass** der Stapel (14) mit einer voreingestellten Kraft durch den zumindest einen Niederhalter (24) fixiert gehalten wird.

## Claims

1. A laminating device for laminating a stack (14) consisting of a plurality of substrate layers (12) to form a composite body, in particular a document body, said device having a main body (16) including a press table (19) on which or with respect to which said stack (14) may be positioned in a working position (35) for forming a composite body, a heating device (31) and a cooling device (32) provided above the press table (19) which form an upper laminating unit (29) and which are thermally decoupled from each other, said upper laminating unit (29) being displaceable for permitting to respectively dispose the heating unit (31) or the cooling unit (32) in a working position (35), **characterised in that**
- below the press table (19), a heating device (31) and a cooling device (32) are provided which form a lower laminating unit (30) and which are thermally decoupled from each other, said lower laminating unit (30) being displaceable for permitting to respectively dispose the heating unit (31) or the cooling unit (32) in said working position (35), and **in that** the heating and cooling devices (31, 32) of the upper laminating unit (29) and the heating and cooling devices (31, 32) of the lower laminating unit (30) are respectively realised in the form of a conjointly displaceable laminating unit (29, 30).

2. The laminating device as claimed in claim 1, **characterised in that** said upper and lower laminating units (29, 30) are displaceable to said working position (35) in synchronism.

3. The laminating device as claimed in claim 1, **characterised in that** the main body (16) has a guiding device (37) provided thereon by means of which the upper and lower laminating units (29, 30) may alternately be transferred from a position of rest (34) to a working position (35) with respect to at least one holding-down device (24) and/or at least one lamination plate (36).

4. The laminating device as claimed in claim 3, **characterised in that** the heating device (31) and the cooling device (32) are provided with a support surface (33) that may be transferred to the working position (35) in which it is applied to said at least one holding-down device (24) and/or to said at least one lamination plate (36).

5. The laminating device as claimed in any of the preceding claims, **characterised in that** the heating device (31) and the cooling device (32) are each provided with a pressure surface (23) which is oriented in a direction facing the movable punch (21) and upon which said at least one movable punch (21) acts.

6. The laminating device as claimed in claims 4 or 5, **characterised in that** the at least one holding-down device (24) receives the lamination plate (36), which may preferably be exchangeable, or **in that** its surface facing the stack (14) is in itself realised as a lamination plate.

7. The laminating device as claimed in any of the preceding claims, **characterised in that** the stack (14) of substrate layers (12) is disposed on a workpiece support (45) which may be transferred to the working position (35) by a transporting apparatus and may be moved to a further processing station once the laminating process has been accomplished, and **in that** preferably the press table (19) is formed as a plate having an aperture on which the workpiece support (45) may be positioned.

8. The laminating device as claimed in claim 7, **characterised in that** the workpiece holder (45) has a mounting frame (61) including an aperture (62) for the arrangement of the substrate layers (12) and **in that** on at least one lateral edge of the mounting frame (61) a fixing device (63) for holding the substrate layers (12) is associated with the aperture (62).

9. The laminating device as claimed in any of the preceding claims, **characterised in that** the press table (19) is associated with at least one of an upper and/or lower holding-down device (24) and an upper and/or lower lamination plate (36).

10. The laminating device as claimed in any of the preceding claims, **characterised in that** the main body (16) has a C-shaped machine frame (17) which has a cross member (18) formed respectively in an upper part and in a lower part thereof for accommodating said movable punch (21).

11. The laminating device as claimed in any one of claims 4 to 10, **characterised in that** the at least one holding-down device (24) is positioned laterally with respect to the main body (16) and may be transferred, using a displacement device (25), between a release position and a holding position for fixedly holding the stack (14) with respect to the workpiece support (45) and/or with respect to the press table (19).

12. A method for laminating a stack (14) consisting of a plurality of substrate layers (12) to form a composite body,
- wherein a stack (14) consisting of a plurality of substrate layers (12) placed in a laminating device (11), in particular a laminating device as claimed in any one of claims 1 to 11, is associated with a press table (19) when in a working position for lamination,
- wherein at least one holding-down device (24) and/or at least one lamination plate (36) is/are transferred to a holding position with respect to the stack and the stack (14) is fixedly held in position,
- wherein for heating and laminating the stack (14), an upper and a lower heating device (31) of an upper and a lower laminating unit (29, 30) is moved to a working position (35) with respect to the press table (19),
- wherein at least one movable punch (21) presses the upper and the lower heating device (31) onto the at least one holding-down device (24) and/or onto the at least one lamination plate (36) during a heating stage in the course of which the transmission of heat and pressure to the stack (14) is initiated,
- wherein once the lamination of the stack (14) has been accomplished, the at least one movable punch (21) is respectively moved upwardly and downwardly and the heating device (31) is lifted with respect to the press table (19) and is subsequently moved to a position of rest (34),
- wherein once the heating device (31) has been transferred from the working position (35) to the position of rest (34), the stack (14) continues to be fixedly held in position by the at least one holding-down device (24) and/or the at least one lamination plate (36),
- wherein the cooling devices (32) of the upper and lower laminating units (29, 30), which in conjunction with the heating devices (31) form jointly displaceable upper and lower laminating units (29, 30), respectively, are transferred to their working positions (35) while the heating devices (31) are being transferred to their positions of rest (34),
- wherein the cooling devices (32) are respectively pressed onto the at least one holding-down device (24) and/or onto the at least one lamination plate (36) by the at least one movable punch (21) during the cooling stage and wherein, once the cooling stage has been accomplished, the cooling devices (32) are moved from their working positions (35) to their positions of rest (34), and
- wherein the at least one holding-down device (24) and/or the at least one lamination plate (36) are transferred to a release position and the laminated composite body is removed from the working position (35) .

13. The method as claimed in claim 12, **characterised in that** the upper laminating unit (29) and the lower laminating unit (30) are advanced towards the stack (14) in a consecutive manner, with infeed rates deviating from each other, or in synchronism.

14. The method as claimed in claim 12 or 13, **characterised in that** during the operation of the laminating device (11), the heating device (31) and the cooling device (32) are each operated in their position of rest (34) and in their working position (35) at a uniform working temperature.

15. The method as claimed in any one of claims 12 to 14, **characterised in that** a preset force is exerted for the stack (14) to be fixedly held in position by the at least one holding-down device (24).

## Revendications

1. Dispositif de stratification destiné à stratifier une pile (14) constituée de plusieurs couches de substrat (12) pour former un corps composite, en particulier un corps de document, pourvu d'un corps de base (16), d'une table de presse (19) sur laquelle ou par rapport à laquelle la pile (14) peut être positionnée dans une position de travail (35) en vue de former le corps composite, d'un dispositif de chauffage (31) et d'un dispositif de refroidissement (32) prévus respectivement au-dessus de la table de presse (19) lesquels forment une unité de stratification supérieure (29) et sont découplés thermiquement entre eux et ladite unité de stratification supérieure (29) pouvant être déplacée en vue de disposer respectivement le dispositif de chauffage (31) ou le dispositif de refroidissement (32) dans une position de travail (35), **caractérisé en ce que**
- au-dessous la table de presse (19) sont prévus un dispositif de chauffage (31) et un dispositif de refroidissement (32) qui forment une unité de stratification inférieure (30) et sont découplés thermiquement entre eux et que ladite unité de stratification inférieure (30) peut être déplacée en vue de disposer respectivement le dispositif de chauffage (31) ou le dispositif de refroidissement (32) dans la position de travail (35), et **en ce que** les dispositifs de chauffage et de refroidissement (31, 32) de l'unité de stratification supérieure (29) et les dispositifs de chauffage et de refroidissement (31, 32) de l'unité de stratification inférieure (30) sont respectivement formés en tant qu'unités de stratification (29, 30) qui peuvent être déplacées conjointement.

2. Dispositif de stratification selon la revendication 1, **caractérisé en ce que** les unités de stratification supérieure et inférieure (29, 30) peuvent être déplacées de manière synchrone dans la position de travail (35).

3. Dispositif de stratification selon la revendication 1, **caractérisé en ce que** sur le corps de base (16) est prévu un dispositif de guidage (37) grâce auquel les unités de stratification supérieure et inférieure (29, 30) peuvent respectivement passer de manière alternée d'une position de repos (34) à une position de travail (35) par rapport à au moins un abaisseur (24) et/ou à au moins une tôle de stratification (36).

4. Dispositif de stratification selon la revendication 3, **caractérisé en ce que** le dispositif de chauffage (31) et le dispositif de refroidissement (32) présentent une surface d'appui (33) qui, dans la position de travail (35), peut venir prendre appui contre ledit au moins un abaisseur (24) et/ou ladite au moins une tôle de stratification (36).

5. Dispositif de stratification selon l'une quelconque des revendications précédentes, **caractérisé en ce que** le dispositif de chauffage (31) et le dispositif de refroidissement (32) présentent respectivement une surface de pression (23) orientée en direction du poinçon mobile (21) contre laquelle vient s'appliquer ledit au moins un poinçon mobile (21).

6. Dispositif de stratification selon la revendication 4 ou 5, **caractérisé en ce que** ledit au moins un abaisseur (24) reçoit, de préférence de manière échangeable, la tôle de stratification (36) ou que sa face tournée vers la pile (14) est réalisée en tant que tôle de stratification.

7. Dispositif de stratification selon l'une quelconque des revendications précédentes, **caractérisé en ce que** la pile (14) de couches de substrat (12) est disposée sur un porte-pièce (45) qui peut être transféré par un dispositif de transport dans la position de travail (35) et qui peut, après la stratification, être déplacé dans une autre station de travail et **en ce que** de préférence la table de presse (19) est réalisée sous la forme d'une plaque pourvue d'un passage traversant sur laquelle peut être positionné le porte-pièce (45).

8. Dispositif de stratification selon la revendication 7, **caractérisé en ce que** le porte-pièce (45) présente un cadre récepteur (61) pourvu d'un évidement (62) pour la disposition des couches de substrat (12) et qu'un dispositif de fixation (63) prévu sur au moins un bord latéral du cadre récepteur (61) est affecté à l'évidement (62) en vue de maintenir les couches de substrat (12).

9. Dispositif de stratification selon l'une quelconque des revendications précédentes, **caractérisé en ce que** la table de presse (19) est affectée à au moins un abaisseur (24) supérieur et/ou inférieur et/ou à au moins une tôle de stratification (36) supérieure et/ou inférieure.

10. Dispositif de stratification selon l'une quelconque des revendications précédentes, **caractérisé en ce que** le corps de base (16) présente un bâti de machine (17) en forme de C qui présente respectivement dans une zone supérieure et une zone inférieure un support transversal (18) destiné à recevoir le poinçon mobile (21).

11. Dispositif de stratification selon l'une quelconque des revendications 4 à 10, **caractérisé en ce que** ledit au moins un abaisseur (24) est positionné de manière latérale par rapport au corps de base (16) et peut passer, grâce à un dispositif de déplacement (25), d'une position de libération à une position de maintien en vue de fixer la pile (14) par rapport au porte-pièce (45) et/ou à la table de presse (19).

12. Procédé destiné à stratifier une pile (14) constituée de plusieurs couches de substrat (12) pour former un corps composite,
- lors duquel une pile (14) de plusieurs couches de substrat (12) se trouvant dans le dispositif de stratification (11), en particulier un dispositif de stratification selon l'une quelconque des revendications 1 à 11, est affectée, dans une position de travail, à une table de presse (19) en vue être stratifiée,
- lors duquel au moins un abaisseur (24) et/ou au moins une tôle de stratification (36) passe/passent dans une position de maintien par rapport à la pile et la pile (14) est fixée,
- lors duquel, en vue de chauffer et de stratifier la pile (14), des dispositifs de chauffage supérieur et inférieur (31) d'unités de stratification supérieure et inférieure (29, 30) sont déplacés dans une position de travail (35) par rapport à la table de presse (19),
- lors duquel au moins un poinçon mobile (21) presse, pendant une phase de chauffage, les dispositifs de chauffage supérieur et inférieur (31) sur ledit au moins un abaisseur (24) et/ou ladite au moins une tôle de stratification (36), et une transmission de chaleur et de pression dans la pile (14) est initiée,
- lors duquel, après la stratification de la pile (14), ledit au moins un poinçon mobile (21) est déplacé respectivement vers le haut et vers le bas et le dispositif de chauffage (31) est soulevé par rapport à la table de presse (19) et est mis ensuite dans une position de repos (34),
- lors duquel, après que le dispositif de chauffage (31) est passé de la position de travail (35) à la position de repos (34), la pile (14) reste maintenue fixée par ledit au moins un abaisseur (24) et/ou ladite au moins une tôle de stratification (36),
- lors duquel des dispositifs de refroidissement (32) des unités de stratification supérieure et inférieure (29, 30), lesquels forment avec les dispositifs de chauffage (31) respectivement lesdites unités de stratification supérieure et inférieure (29, 30) qui peuvent être déplacées conjointement, passent dans la position de travail (35) en même temps que les dispositifs de chauffage (31) passent dans la position de repos (34),
- lors duquel, pendant la phase de refroidissement, les dispositifs de refroidissement (32) sont pressés par ledit au moins un poinçon mobile (21) sur ledit au moins un abaisseur (24) et/ou ladite au moins une tôle de stratification (36) et lors duquel, après la phase de refroidissement, les dispositifs de refroidissement (32) passent de la position de travail (35) à la position de repos (34) et
- lors duquel ledit au moins un abaisseur (24) et/ou ladite au moins une tôle de stratification (36) sont mis dans une position de libération et le corps composite stratifié est sorti de la position de travail (35).

13. Procédé selon la revendication 12, **caractérisé en ce que** l'unité de stratification supérieure (29) et l'unité de stratification inférieure (30) sont déplacées vers la pile (14) de manière successive, avec des vitesses d'avance qui diffèrent l'une de l'autre ou de manière synchrone.

14. Procédé selon la revendication 12 ou 13, **caractérisé en ce que** le dispositif de chauffage (31) et le dispositif de refroidissement (32) fonctionnent respectivement avec une température de travail lorsque le dispositif de stratification (11) se trouve dans la position de repos (34) et dans la position de travail (35).

15. Procédé selon l'une quelconque des revendications 12 à 14, **caractérisé en ce que** la pile (14) est maintenue fixée par ledit au moins un abaisseur (24) avec une force préréglée.
